Europäisches Patentamt

European Patent Office

Office européen des brevets

(19)

(11) Veröffentlichungsnummer: **0 041 179**
**B1**

(12) **EUROPÄISCHE PATENTSCHRIFT**

(45) Veröffentlichungstag der Patentschrift:
18.04.84

(51) Int. Cl.³: **H 04 B 7/26, H 04 Q 7/04**

(21) Anmeldenummer: 81103845.4

(22) Anmeldetag: 19.05.81

(54) **Mobilfunksystem mit Hauptkanälen für die drahtlose Kommunikation zwischen und mit Mobilteilnehmergeräten und mit Subkanälen für drahtlose Nahverbindungen zwischen Mobilteilnehmergeräten und diesen zugeordneten tragbaren Kommunikationsgeräten.**

(30) Priorität: 04.06.80 DE 3021171

(43) Veröffentlichungstag der Anmeldung:
09.12.81 Patentblatt 81/49

(45) Bekanntmachung des Hinweises auf die Patenterteilung:
18.04.84 Patentblatt 84/16

(84) Benannte Vertragsstaaten:
AT BE CH DE FR GB IT LI LU NL SE

(56) Entgegenhaltungen:
US - A - 4 056 780

L'ONDE ELECTRIQUE, Band 54, Heft 5, Mai 1974, PARIS (FR) BAUDIN et al.: "Radiotéléphonie mobile automatique, perspectives d'avenir", Seiten 211-221

(73) Patentinhaber: SIEMENS AKTIENGESELLSCHAFT,
Berlin und München Wittelsbacherplatz 2,
D-8000 München 2 (DE)

(72) Erfinder: Das Gupta, Probodh, Lohengrinstrasse 32,
D-8034 Germering (DE)
Erfinder: Möckel, Peter, Dr. Dipl.-Ing.,
Thomas-v.-Kempen-Weg 11, D-8000 München 71 (DE)
Erfinder: Künzel, Roland, Dipl.-Ing., Irisweg 4,
D-8039 Puchheim (DE)
Erfinder: Röttger, Klaus, Dipl.-Math.,
Emil-Riedel-Strasse 11, D-8000 München 22 (DE)
Erfinder: Meier, Werner, Dipl.-Math., Von der
Tannstrasse 20, D-6900 Heidelberg (DE)

ACTORUM AG

Mobilfunksystem mit Hauptkanälen für die drahtlose Kommunikation zwischen und mit Mobilteilnehmergeräten und mit Subkanälen für drahtlose Nahverbindungen zwischen Mobilteilnehmergeräten und diesen zugeordneten tragbaren Kommunikationsgeräten

Die vorliegende Erfindung betrifft ein Mobilfunksystem mit Hauptkanälen für die drahtlosen Kommunikationen zwischen und mit Mobilteilnehmergeräten und mit Subkanälen für drahtlose Nahverbindungen zwischen Mobilteilnehmergeräten und diesen zugeordneten tragbaren Kommunikationsgeräten, bei dem für ein dem Mobilfunksystem zugrundeliegendes Funknetz mehrere Funkstellen in einer gegenseitigen räumlichen Anordnung nach Art eines Zellularsystems mit sich überlappenden Funkzellen vorgesehen sind und für das ein Frequenzverteilungsplan für die Funkstellen besteht, der Gleichkanalstörungen zwischen den Funkzellen einschliesslich einer erweiterten Randzone weitgehend ausschliesst.

In Mobilfunksystemen mit zellularer Einteilung des Versorgungsgebiets, beispielsweise Autotelefonsystemen, soll für den Mobilteilnehmer die Möglichkeit bestehen, auch bei räumlicher Entfernung von seinem Mobilteilnehmergerät mit diesem und damit mit dem Kommunikationssystem drahtlos über ein mitzuführendes Handgerät in Kontakt zu stehen. Dieser Kontakt kann den vollen Kommunikationsverkehr, beispielsweise Fernsprechen kommend und gehend, oder auch eingeschränkten Kommunikationsverkeh, beispielsweise Personenruf, betreffen. In bisher bekannten Mobilfunksystemen ist die Möglichkeit einer drahtlosen Verbindungen zwischen Mobilteilnehmer und zugehörigem Mobilteilnehmerendgerät nicht vorgesehen, oder es werden zusätzliche Frequenzen verwendet, die nicht für die Verbindung Funkstelle-Mobilteilnehmergerät benutzt werden.

Ein Mobilfunksystem mit einem zellularen Aufbau sich überlappender Funkzellen ist beispielsweise in der US-PS Nr. 3310741 beschrieben.

Für mobile öffentliche und nichtöffentliche Funkdienste existieren eine ganze Reihe von Funknetzen unterschiedlicher Struktur. Im allgemeinen wird zwischen dem öffentlichen beweglichen Landfunk (ÖbL) und dem nichtöffentlichen beweglichen Landfunk (NöbL) unterschieden. Der öffentliche bewegliche Landfunk umfasst die mobilen Fernsprechteilnehmer, die über Funkvermittlungen mit den Wählvermittlungen des öffentlichen Fernsprechnetzes verbunden werden können. Zu den Teilnehmergruppen des nichtöffentlichen beweglichen Landfunks gehören die öffentlichen Sicherheitsorgane, wie Polizei, Feuerwehr, Unfalldienste und Katastrophenschutz, ferner Dienstleistungsgruppen, wie Taxiunternehmen, Transportunternehmen sowie Industriefunk, Geschäftsfunk, Grossbaustellenfunk und dergleichen mehr.

Insbesondere bei den Teilnehmergruppen des nichtöffentlichen beweglichen Landfunks besteht ein Bedarf für ein Mobilfunksystem, bei dem es möglich ist, räumlich unabhängig von dem zumeist in einem Kraftfahrzeug untergebrachten Mobilteilnehmergerät mit anderen Teilnehmern innerhalb des Funknetzes zu kommunizieren.

Aus der US-A Nr. 4056780 ist ein System zur Zuweisung von Kanälen für Verbindungen zwischen Mobilteilnehmergeräten und tragbaren Handgeräten bekannt, bei dem allerdings für die dafür erforderlichen Hilfskanäle zusätzliche Frequenzen verwendet werden.

Der vorliegenden Erfindung liegt die Aufgabe zugrunde, ein Mobilfunksystem zu schaffen, bei dem drahtlose Nahverbindungen zwischen Mobilteilnehmergeräten und tragbaren Kommunikationsgeräten über Subkanäle verbindbar sind, deren Kanalfrequenzen bereits für entfernter benachbarte Hauptkanäle innerhalb des Funknetzes verwendet sind.

Die der Erfindung zugrundeliegende Aufgabe wird durch ein Mobilfunksystem mit Hauptkanälen für drahtlose Verbindungen zwischen und mit Mobilteilnehmergeräten und mit Subkanälen für drahtlose Nahverbindungen zwischen Mobilteilnehmergeräten und diesen zugeordneten tragbaren Kommunikationsgeräten gelöst, bei dem für ein dem Mobilfunksystem zugrundeliegendes Funknetz mehrere Funkstellen in einer gegenseitigen räumlichen Anordnung nach Art eines Zellularsystems mit sich überlappenden Funkzellen vorgesehen sind und für das ein Frequenzverteilungsplan für die Funkstellen besteht, der Gleichkanalstörungen in der jeweiligen Funkzelle einschliesslich einer erweiterten Randzone weitgehend ausschliesst. Das erfindungsgemässe Mobilfunksystem ist zur Lösung der genannten Aufgabe dadurch gekennzeichnet, dass die jeweils betrachtete Subkanalzelle als Subkanäle Frequenzen mit gegenüber den Hauptkanalsendeleistungen verringerten Sendeleistungen verwendet, die gleich den Frequenzen von Hauptkanälen anderer Hauptkanalzellen des Funknetzes sind, wobei die Subkanalzelle im Hauptkanalstörbereich der betrachteten Hauptkanalzellen liegt und wobei die Zellengrenzen der Subkanalzellen nicht mit denen der Hauptkanalzellen übereinstimmen müssen.

Die Erfindung bietet den Vorteil, dass wertvolle Kanalfrequenzen durch Mehrfachausnutzung bereits vorhandener, in dem Mobilfunksystem ausgenutzte Kanalfrequenzen bereitgestellt werden können.

Weiterbildungen der Erfindung sind durch die in den Unteransprüchen angegebenen Merkmale gekennzeichnet.

Im folgenden wird die Erfindung anhand von zwei, lediglich Ausführungsbeispiele für die Erfindung darstellenden Figuren im einzelnen erläutert.

Fig. 1 zeigt das Ausführungsbeispiel für eine räumliche Kanalverteilung für ein Funknetz F mit untereinander gleichgrossen Funkzellen und einer hexagonalen Anordnung der stationären Funkstellen.

Fig. 2 zeigt in Form eines Diagramms das Beispiel für eine Funkausbreitungscharakteristik für Haupt- und Subkanäle nach CCIR für ein konkretes Ausführungsbeispiel für die Geometrie gemäss Fig. 1.

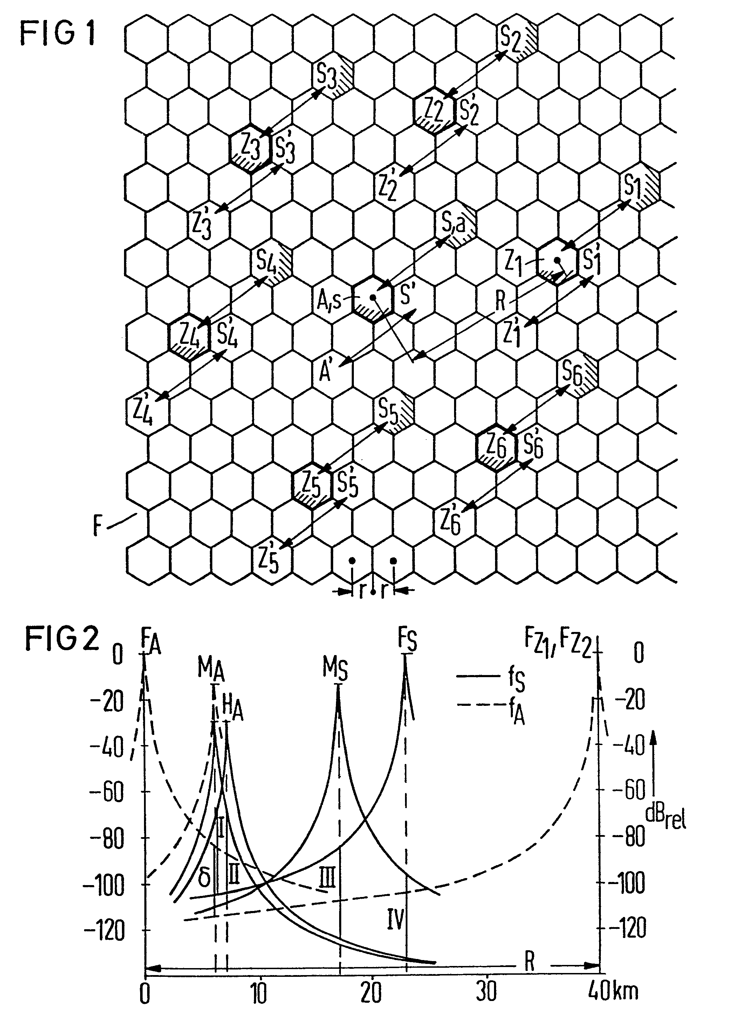

Wie bereits erläutert, zeigt Fig. 1 die räumliche Kanalverteilung für ein Funknetz F mit untereinander gleichgrossen Funkzellen und einer hexagonalen Anordnung der stationären Funkstellen. Eine betrachtete Ausgangszelle, nämlich eine Hauptkanalzelle A, hat sechs nächstbenachbarte Gleichkanalzellen $Z_1$ bis $Z_6$ in einer Gleichkanalwiederholungsentfernung R. Die Gleichkanalzellen $Z_1$ bis $Z_6$ bilden ein regelmässiges Sechseck mit der Gleichkanalwiederholungsentfernung R als Seitenlänge. Der Hauptkanalzelle A wird als Subkanalzelle s diejenige Zelle zugeordnet, die möglichst nahe dem Schwerpunkt eines aus den Zellenmittelpunkten der Hauptkanalzelle A und den Gleichkanalzellen $Z_1$ und $Z_2$ gebildeten Dreiecks liegt. Mit dieser Zuordnungsbedingung ist aus Symmetriegründen gewährleistet, dass keine der frequenzmässig äquivalenten Zellen $S_1$ bis $S_6$ zu der Hauptkanalzelle A oder irgendeiner der frequenzmässig äquivalenten Gleichkanalzellen $Z_1$ bis $Z_6$ einen kleineren räumlichen Abstand als A-S hat. Die Hauptkanal-/Subkanalzuordnung A/s gilt analog für jede beliebig zu der Hauptkanalzelle A verschobene Zelle A'. Durch diese Subkanalzuweisung ergibt sich als neue Gleichkanalwiederholungsentfernung $A-S \approx R/\sqrt{3} \approx 0.58$.

Fig. 2 zeigt, wie bereits erläutert, die Funkausbreitungscharakteristik für Haupt- und Subkanäle (Frequenz $f_A$ bzw. $f_s$) nach CCIR für ein konkretes Ausführungsbeispiel in der Geometrie gemäss Fig. 1. Für dieses ausgeführte Beispiel wurde ein Funkzellenradius r = 6 km, ein Gleichkanalwiederholungsabstand R = 40 km und damit A−S = 23 km bei einer Sendeleistung der Funkstellen von 20 W ($\triangleq$ 0 $dB_{rel}$) und einer Sendeleistung des Mobilteilnehmergerätes im Hauptkanal von 1 W ($\triangleq$ −13 $dB_{rel}$) angenommen. Wenn für das Mobilteilnehmergerät $M_A$ und das Handgerät $H_A$ im Subkanal eine Sendeleistung von jeweils 20 mW ($\triangleq$ −30 $dB_{rel}$) angenommen wird, so sind noch bei 1 km Entfernung zwischen $M_A$ und $H_A$ die Pegeldifferenzen I bis IV bei der Subkanalfrequenz $f_s$ bei $M_A$, $H_A$ und in der Subkanalzelle s (Mobilteilnehmergerät $M_S$ und Funkstelle $F_S$) grösser als der am Zellenrand geforderte Gleichkanalstörabstand $\delta$. Bei Verwendung verschiedener Modulations- und/oder Polarisationsverfahren für Hauptkanal- und Subkanalverbindung sind auch kleinere Pegeldifferenzen zulässig.

Für eine Realisierung von drahtlosen Nahverbindungen zwischen Mobilteilnehmergerät und tragbarem Handgerät in einem zellular aufgebauten Mobilfunksystem ergibt sich damit eine Zuordnung von Subkanälen für die drahtlose Nahverbindung zu den Hauptkanälen mit Auswahl der Subkanalzelle nach dem oben veschriebenen Verfahren derart, dass sie zu allen ihr nächstbenachbarten Hauptkanalzellen einen grösstmöglichen Abstand besitzt. Für die Subkanal-/Hauptkanalzuordnung sind verschiedene Zuordnungsmodi möglich. Es ist beispielsweise eine feste 1:1-Zuordnung bei einer statischen Kanalzuweisung und einer gleichen Kanalanzahl pro Zelle durchführbar. Ferner ist eine feste, teilweise Zuordnung bei einer statischen Kanalzuweisung, jedoch bei unterschiedlichen Kanalanzahlen pro Zelle möglich. Ein weiterer Zuordnungsmodus sieht eine feste Zuordnung nur zwischen statisch zugewiesenen Kanälen bei hybrider, nämlich gemischt statisch-dynamischer Kanalzuweisung vor. Schliesslich ist für einen weiteren Zuordnungsmodus eine Einbeziehung in die Kanalzuweisungsalgorithmen bei hybrider oder dynamischer Kanalzuweisung vorgesehen.

Das erfindungsgemässe Mobilfunksystem erlaubt auf einfache Art und Weise, für eine drahtlose Nahverbindung zwischen einem Mobilteilnehmergerät und einem diesen zugeordneten tragbaren Kommunikationsgerät zwei Subkanäle als Hin- und Rückkanal vorzusehen. Dabei fungiert das jeweils betreffende Mobilteilnehmergerät als Zwischenstation mit einer Frequenzumsetzeinrichtung zur Verbindung des jeweiligen Hauptkanals mit dem jeweiligen Subkanal. Zur Verringerung von Gleichkanalstörungen bei der Subkanalfrequenz liegt die Subkanalzelle möglichst weit entfernt von allen nächstbenachbarten Hauptkanalzellen.

Gemäss einer Weiterbildung der Erfindung ist vorgesehen, dass die Verwendungsorte der Subkanäle a,s derart gewählt sind, dass der statistische Erwartungswert eines Störmasses der durch die Subkanäle a,s bewirkten Störungen im Funknetz einen zulässigen Wert nicht überschreitet. Zweckmässigerweise werden die Verwendungsorte der Subkanäle a,s derart ausgewählt, dass dieser statistische Erwartungswert der durch die Subkanäle a,s bewirkten Störungen in dem Funknetz F ein Minimum annimmt.

Gemäss einer anderen Weiterbildung der Erfindung ist vorgesehen, dass an den Orten, an denen ein Kanal als Subkanal, beispielsweise a, verwendet wird, der notwendige Störabstand trotz der Verwendung desselben Kanals in anderen Zellen als Hauptkanal oder als Subkanal eingehalten ist und dass der notwendige Störabstand in den anderen Zellen nicht unterschritten wird. Zweckmässigerweise werden die Orte so gewählt, dass der Störabstand möglichst gross ist.

Gemäss einer anderen Weiterbildung der Erfindung ist vorgesehen, dass für Haupt- und Subkanalverbindungen unterschiedliche Modulationsarten zur Verringerung der Gleichkanalstörempfinglichkeit verwendet werden.

Andere Weiterbildungen der Erfindung sehen vor, dass für die Haupt- und Subkanalverbindungen unterschiedliche Polarisations- und/oder Modulationsarten verwendet werden.

Durch diese vorteilhaften Massnahmen wird die Störsicherheit in dem betrachteten Funknetz F weiter erhöht.

## Patentansprüche

1. Mobilfunksystem mit Hauptkanäle für die drahtlose Kommunikation zwischen und mit Mobilteilnehmergeräten und mit Subkanälen für drahtlose Nahverbindungen zwischen Mobilteilnehmergeräten und diesen zugeordneten tragbaren Kommunikationsgeräten, bei dem für dem Mobilfunksystem zugrundeliegendes Funknetz mehrere Funkstellen in einer gegenseitigen räumlichen Anordnung nach Art eines Zellularsystems mit sich üperlappenden Funkzellen vorgesehen sind und für das ein Frequenzverteilungsplan für die Funkstellen besteht, der Gleichkanalstörungen in der jeweiligen Funkzelle einschliesslich einer erweiterten Randzone weitgehend ausschliesst, dadurch gekennzeichnet, dass eine jeweils betrachtete Subkanalzelle (z.B. s) als Subkanäle Frequenzen mit gegenüber den Hauptkanalsendeleistungen verringerten Sendeleistungen verwendet, die gleich den Frequenzen von Hauptkanälen anderer Hauptkanalzellen (z.B. S) des Funknetzes (F) sind, wobei die Subkanalzelle (s) im Störeinstrahlungsbereich der betrachteten Hauptkanalzellen (z.B. A) liegt und wobei die Zellengrenzen der Subkanalzellen (a, s) nicht mit denen der Hauptkanalzellen (A, S) übereinstimmen müssen.

2. Mobilfunksystem nach Anspruch 1, dadurch gekennzeichnet, dass jeweils für eine drahtlose Nahverbindung zwischen und mit einem Mobilteilnehmergerät und einem diesem zugeordneten tragbaren Kommunikationsgerät zwei Subkanäle (z.B. a, s) als Hin- und Rückkanal vorgesehen sind und dass das jeweils betreffende Mobilteilnehmergerät als Zwischenstation mit einer Frequenzumsetzeinrichtung zur Verbindung des jeweiligen Hauptkanals mit dem jeweiligen Subkanal (a bzw. s) versehen ist.

3. Mobilfunksystem nach einem der beiden Ansprüche 1 oder 2, dadurch gekennzeichnet, dass die Verwendungsorte der Subkanäle (a, s) derart gewählt sind, dass der statistische Erwartungswert eines Störmasses der durch die Subkanäle (a, s) bewirkten Störungen im Funknetz einen zulässigen Wert nicht überschreitet.

4. Mobilfunksystem nach Anspruch 3, dadurch gekennzeichnet, dass die Verwendungsorte der Subkanäle (a, s) derart gewählt sind, dass der statistische Erwartungswert eines Störmasses der durch die Subkanäle (a, s) bewirkten Störungen im Funknetz ein Minimum annimmt.

5. Mobilfunksystem nach einem der Ansprüche 3 oder 4, dadurch gekennzeichnet, dass an den Orten, an denen ein Kanal als Subkanal (a, s) verwendet wird, der notwendige Störabstand trotz der Verwendung desselben Kanals in anderen Zellen als Hauptkanal oder als Subkanal eingehalten ist und dass der notwendige Störabstand in den anderen Zellen nicht unterschritten wird.

6. Mobilfunksystem nach Anspruch 5, dadurch gekennzeichnet, dass an den Orten, an denen ein Kanal als Subkanal (a, s) verwendet wird, der Störabstand möglichst gross ist.

7. Mobilfunksystem nach einem oder mehreren der vorhergehenden Ansprüche, dadurch gekennzeichnet, dass zur Verringerung von Gleichkanalstörungen bei der Subkanalfrequenz die Subkanalzelle (s) hinreichend weit entfernt von allen nächstbenachbarten Hauptkanalzellen liegt.

8. Mobilfunksystem nach einem der vorhergehenden Ansprüche, dadurch gekennzeichnet, dass für Haupt- und Subkanalverbindungen unterschiedliche Modulationsarten zur Verringerung der Gleichkanalstörempfindichkeit verwendet werden.

9. Mobilfunksystem nach einem oder mehreren der Ansprüche 1 bis 7, dadurch gekennzeichnet, dass für Haupt- und Subkanalverbindungen unterschiedliche Polarisationsarten verwendet werden.

10. Mobilfunksystem nach einem oder mehreren der Ansprüche 1 bis 7, dadurch gekennzeichnet, dass für Haupt- und Subkanalverbindungen sowohl unterschiedliche Modulationsarten als auch unterschiedliche Polarisationsarten verwendet werden.

11. Mobilfunksystem nach Anspruch 1, dadurch gekennzeichnet, dass die flächenmässige Anordnung der Funkkonzentratoren ein Funknetz (F) mit sich überlappenden, idealisiert hexagonalen und gleichgrossen Funkzellen bildet, wobei eine jeweils betrachtete Hauptkanalzelle (A bzw. A') aus der das Funknetz (F) bildenden Vielzahl von Funkzellen von jeweils sechs nächstbenachbarten Gleichkanalzellen ($Z_1$, ..., $Z_6$ bzw. $Z_6'$) in einer regelmässigen hexagonalen Anordnung umgeben ist, so dass die nächstbenachbarten Gleichkanalzellen ($Z_1$, ..., $Z_6$ bzw. $Z_1'$, ..., $Z_6'$) ein regelmässiges Sechsseck mit einer Gleichkanalwiederholungsentfernung (R) als Seitenlänge bilden, welche Gleichkanalwiederholungsentfernung (R) auch jeweils zwischen jeder einzelnen Gleichkanalzelle ($Z_1$ bzw. $Z_2$, ..., bzw. $Z_6$ bzw. $Z_1'$ bzw. $Z_2'$, ..., bzw. $Z_6'$) und der betrachteten Haupkanalzelle (A bzw. A') besteht, und dass der betrachteten Hauptkanalzelle (A bzw. A') ein Subkanal (s bzw. s') zugeordnet ist, dessen Frequenz der Hauptkanalfrequenz einer möglichst nahe dem gedachten Schwerpunkt eines aus der betrachteten Hauptkanalzelle (A bzw. A') und beispielsweise der betreffenden ersten nächstbenachbarten Gleichkanalzelle ($Z_1$ bzw. $Z_1'$) und der betreffenden zweiten nächstbenachbarten Gleichkanalzelle ($Z_2$ bzw. $Z_2'$) gebildeten gleichseitigen Dreiecks gelegenen weiteren Zelle (S bzw. S') entspricht.

12. Mobilfunksystem nach einem oder mehreren der vorhergehenden Ansprüche, dadurch gekennzeichnet, dass eine feste 1:1-Zuordnung der Subkanäle zu den Hauptkanälen vorgesehen ist.

## Revendications

1. Réseau radio mobile comportant des canaux principaux pour les liaisons sans fil entre et avec des postes d'abonné mobiles et comportant des canaux secondaires pour des liaisons sans fil à courte distance entre des postes d'abonné mobiles et des appareils de communication portatifs associés à ces postes, et dans lequel, pour un réseau de stations radio mobiles, il est prévu plusieurs stations de radiocommunication situées dans une disposition spatiale réciproque à la manière d'un système cellulaire avec des cellules de radiocommunication en recouvrement, et pour lequel il existe un plan de répartition des fréquences pour les stations de radiocommunication, qui exclut dans une large mesure des interférences par

canal commun entre les cellules de radiocommunication, y compris une zone marginale étendue, caractérisé par le fait qu'une cellule à canal secondaire respectivement considérée (par exemple s) utilise, comme canaux secondaires, des fréquences présentant des puissances d'émission réduites par rapport aux puissances d'émission des canaux secondaires et qui sont égales aux fréquences des canaux secondaires d'autres cellules à canal principal (par exemple S) du réseau de stations de radio (F), la cellule à canal secondaire (s) étant située dans la zone de parasitage de la cellule considérée à canal principal (par exemple A), et les limites des cellules à canal secondaire (a, s) ne devant pas coïncider avec celles des cellules à canal principal (A, S).

2. Réseau radio mobile suivant la revendication 1, caractérisé par le fait qu'il est prévu deux canaux secondaires, par exemple (a, s) en tant que canal aller et canal retour respectivement pour une liaison sans fil à courte distance entre et avec un poste d'abonné mobile et un appareil de communication portatif associé à ce poste et que le poste d'abonné mobile considéré est équipé, en tant que station intermédiaire, d'un dispositif convertisseur de fréquence servant à relier le canal principal respectif au canal secondaire respectif (a ou s).

3. Réseau radio mobile suivant l'une des revendications 1 ou 2, caractérisé par le fait que les emplacements d'utilisation des canaux secondaires (a, s) sont choisis de telle manière que l'espérance statistique d'une valeur des perturbations provoquées par les canaux secondaires (a, s) dans le réseau de station de radio ne dépasse pas une valeur admissible.

4. Réseau radio mobile suivant la revendication 3, caractérisé par le fait que les emplacements d'utilisation des canaux secondaires (a, s) sont choisis de telle manière que l'espérance statistique d'une valeur des perturbations provoquées par les canaux secondaires (a, s) dans le réseau de station de radio prend une valeur minimale.

5. Réseau radio mobile suivant la revendication 4, caractérisé par le fait que, aux emplacements où un canal est utilisé en tant que canal secondaire (a, s), le rapport signal/bruit nécessaire est respecté, en dépit de l'utilisation de ce même canal dans d'autres cellules en tant que canal principal ou en tant que canal secondaire, et que le rapport signal/bruit dans d'autres cellules ne tombe pas au-dessous de la valeur nécessaire.

6. Réseau radio mobile suivant la revendication 5, caractérisé par le fait que, aux emplacements où le canal est utilisé en tant que canal secondaire (a, s), le rapport signal/bruit est aussi élevé que possible.

7. Réseau radio mobile suivant une ou plusieurs des revendications précédentes, caractérisé par le fait que, pour réduire les interférences par canal commun, dans le cas de la fréquence du canal secondaire, la cellule à canal secondaire (a) est suffisamment éloignée de toutes les cellules à canal principal directement voisines.

8. Réseau radio mobile suivant l'une des revendications précédentes, caractérisé par le fait que, pour des liaisons de canaux principaux et de canaux secondaires, on utilise des types différents de modulation pour réduire la sensibilité aux interférences par canal commun.

9. Réseau radio mobile suivant une ou plusieurs des revendications 1 à 7, caractérisé par le fait que, pour des liaisons de canaux principaux, et de canaux secondaires, on utilise des types différents de polarisation.

10. Réseau radio mobile suivant une ou plusieurs des revendications 1 à 7, caractérisé par le fait que, pour des liaisons de canaux principaux et de canaux secondaires, on utilise aussi bien des types différents de modulation que des types différents de polarisation.

11. Réseau radio mobile suivant la revendication 1, caractérisé par le fait que la disposition, étendue en surface, des concentrateurs hertziens forment un réseau de stations de radio (F) comportant des cellules de radiocommunication et recouvrement, de forme hexagonale idéalisée et possédant des tailles identiques, par le fait qu'une cellule, respectivement considérée à canal principal (A ou A') faisant partie du nombre important de cellules de radiocommunication constituant le réseau de stations de radio (F), est entourée par respectivement six cellules à canal commun directement voisines ($Z_1$, ..., $Z_6$ ou $Z'_1$, ..., $Z'_6$) selon une disposition hexagonale régulière, de telle sorte que les cellules à canal commun directement voisines ($Z_1$, ..., $Z_6$ ou $Z'_1$, ..., $Z'_6$) forment un hexagone régulier dont la longueur des côtés est égale à une distance (R) de répétition du canal commun, qui existe également respectivement entre chaque cellule individuelle à canal commun ($Z_1$ ou $Z_2$, ..., ou $Z_6$ ou $Z'_1$ ou $Z'_2$, ..., ou $Z'_6$) et la cellule considérée à canal principal (A ou A'), et par le fait qu'à la cellule considérée à canal principal (A ou A') est associé un canal secondaire (s ou s'), dont la fréquence correspond à la fréquence du canal principal d'une autre cellule (S ou S') aussi rapprochée que possible du barycentre imaginaire d'un triangle équilatéral formé à partir de la cellule considérée à canal principal (A ou A') et, par exemple, de la première cellule ($Z_1$ ou $Z'_1$) et de la seconde cellule considérée directement voisine à canal commun ($Z_2$ ou $Z'_2$).

12. Réseau radio mobile suivant une ou plusieurs des revendications précédentes, caractérisé par le fait qu'il est prévu une association 1:1 fixe entre les canaux secondaires et les canaux principaux.

## Claims

1. A mobile radio system with main channels for wireless communication between and with mobile suscriber devices, and with sub-channels for local wireless connections between mobile subscriber devices and portable communication devices assigned to said mobile subscriber devices, wherein the mobile radio system is based on a radio network having a plurality of radio stations provided in a reciprocal spatial arrangement forming a cellular system with overlapping radio cells, and the radio stations are provided with a frequency distribution plan which substantially eliminates same-channel disturbances in any given radio cell including an extended boundary zone, characterised in that in each considered sub-channel cell (e.g. s) sub-channels use frequencies with transmitting powers which are reduced relative to the main channel transmitting powers and which are equal to the frequencies of main channels of the other main channel cells (e.g. S) of the radio network (F), where the sub-channel cell (s) lies in the interference irradiation zone of the main channel cells in question (e.g. A) and where the cell boundaries of the sub-channel cells (a, s) need not be identical to those of the main channel cells (A, S).

2. A mobile radio system as claimed in claim 1, characterised in that for a local wireless connection between and with a mobile subscriber device and a portable communication device assigned to the scriber device, two sub-channels (e.g. a, s) are provided as outward and return channels, and that the mobile subscriber device in question serves as an intermediate station and is provided with a frequency converter which serves to connect the main channel in question to the sub-channel in question (a and s).

3. A mobile radio system as claimed in claim 1 or 2, characterised in that the locations of the sub-channels used (a, s) are selected to be such that the statistical anticipated value of the level of interference in the radio network produced by the sub-channels (a, s) does not exceed a permitted value.

4. A mobile radio system as claimed in claim 3, characterised in that the locations of the sub-channels (a, s) used are such that the statistical anticipated value of the level of interference in the radio network produced by the sub-channels (a, s) assumes a minimum value.

5. A mobile radio system as claimed in claim 3 or 4, characterised in that at the locations at which a channel is used as a sub-channel (a, s), the requisite signal-to-noise ratio is maintained in spite of the use of the same channel in other cells as main channel or sub-channel, and that tue requisite signal-to-noise ratio is not undershot in the other cells.

6. A mobile radio system as claimed in claim 5, characterised in that at the locations at which a channel is used as a sub-channel (a, s) the signal-to-noise ratio is as high as possible.

7. A mobile radio system as claimed in one or several of the preceding claims, characterised in that in order to reduce same-channel interference at the sub-channel frequency the sub-channel cell (s) is located at a sufficient distance from all the most closely neighbouring main channel cells.

8. A mobile radio system as claimed in one of the preceding claims, characterised in that different types of modulation are used for main and sub-channel connections in order to reduce the same-channel interference sensitivity.

9. A mobile radio system as claimed in one or several of the claims 1 to 7, characterised in that different types of polarisation are used for main and sub-channel connections.

10. A mobile radio system as claimed in one or several of the claims 1 to 7, characterised in that both different types of modulation and different types of polarisation are used for main and sub-channel connections.

11. A mobile radio system as claimed in claim 1, characterised in that the areal arrangement of the radio concentrators forms a radio network (F) with overlapping, idealised hexagonal and equal-sized radio cells, where an observed main channel cell (A, A') amongst the plurality of radio cells which form the radio network (F) is surrounded by six closely neighbouring same-channel cells ($Z_1,...,Z_6$ or $Z_1',...,Z_6'$) in a regular hexagonal arrangement so that the most closely neighbouring same-channel cells ($Z_1, ..., Z_6$ or $Z_1', ..., Z_6'$) form a regular hexagon with a same-channel repetition distance (R) as side length, which same-channel repetition distance (R) also exists between each individual same-channel cell ($Z_1$ or $Z_2$, ..., or $Z_6$ or $Z_1'$ or $Z_2'$, ..., or $Z_6'$) and the main channel cell in question (A, A'), and to the main channel cell in question (A, A') is assigned a sub-channel (s, s') whose frequency corresponds to the main channel frequency of a further cell (S, S') located as close as possible to the imaginary centre of gravity of an equilateral triangle formed from the main channel cell in question (A, A') and, for example, the relevant first most closely neighbouring same-channel cell ($Z_1, Z_1'$) and the relevant second most closely neighbouring same-channel cell ($Z_2, Z_2'$).

12. A mobile radio system as claimed in one or several of the preceding claims, characterised in that there is a fixed 1:1 assignment of the sub-channels to the main channels.

# FIG 1

# FIG 2